# EUROPÄISCHE PATENTANMELDUNG

(11) **EP 3 716 211 A1**
(43) Veröffentlichungstag der Anmeldung: **30.09.2020**
(21) Anmeldenummer: 19165195.9
(22) Anmeldetag: 26.03.2019
(51) Int. Cl.: G06T 7/80, H04N 13/246, H04N 17/00

(54) **VERFAHREN, VORRICHTUNG, SERVER UND SYSTEM ZUR KALIBRIERUNG MINDESTENS EINER KAMERA EINES FAHRERASSISTENZSYSTEMS**

(71) Anmelder: Hella Gutmann Solutions GmbH, 79241 Ihringen (DE)
(72) Erfinder: Kolberg, Ralph, 79111 Freiburg i. Br. (DE)
(74) Vertreter: Pfenning, Meinig & Partner mbB

(57) **Zusammenfassung**

Die Erfindung betrifft ein Verfahren zum Kalibrieren mindestens einer Kamera (65) eines Fahrerassistenzsystems (64), umfassend die Schritte:
- Abbilden des Kalibrierungsmusters (1) mittels einer Anzeigevorrichtung (40) und
- Übermitteln eines Steuerbefehls an die Kamera (65) zum Aufnehmen des durch die Anzeigevorrichtung abgebildeten Kalibrierungsmusters (1). Außerdem betrifft die Erfindung ein weiteres Verfahren, eine Vorrichtung (10), einen Server (70) und ein System (100) zum Kalibrieren mindestens einer Kamera (65) eines Fahrerassistenzsystems (64).

## Beschreibung

Die Erfindung betrifft mehrere Verfahren, eine Vorrichtung, einen Server und ein System zur Kalibrierung mindestens einer Kamera eines Fahrerassistenzsystems.

Heutzutage verbauen Fahrzeughersteller unterschiedliche Kameras für ihre Fahrerassistenzsysteme. Damit das Kamerasystem des Fahrerassistenzsystems nach den Vorgaben des Herstellers justiert oder kalibriert werden kann, benötigt eine herkömmliche Kamerakalibrierungsvorrichtung (camera and sensor calibration tool, CSC-tool) eine Vielzahl herstellerspezifischer Kalibriertafeln mit aufgedruckten Kalibrierungsmustern. Im Moment müssen diese Kalibriertafeln bei der Kalibrierung von unterschiedlichen Fahrzeugtypen jeweils ausgetauscht werden. Allerdings stehen nicht immer aktuelle Kalibriertafeln zur Verfügung, sodass Fahrerassistenzsysteme von neuen Fahrzeugtypen nicht kalibriert werden können.

Es wäre wünschenswert, eine praxistaugliche Lösung für das beschriebene Problem zu finden.

Diese Aufgabe wird erfindungsgemäß durch verschiedene Verfahren, eine Vorrichtung sowie einen Server gemäß den unabhängigen Ansprüchen gelöst. Vorteilhafte Weiterbildungen sind in der nachfolgenden Beschreibung und in den abhängigen Ansprüchen beschrieben.

Es wird ein erstes Verfahren zum Kalibrieren mindestens einer Kamera eines Fahrerassistenzsystems vorgeschlagen. Das Verfahren umfasst die Schritte:
- Abbilden eines Kalibrierungsmusters mittels einer Anzeigevorrichtung und
- Übermitteln eines Steuerbefehls an die Kamera zum Aufnehmen des durch die Anzeigevorrichtung abgebildeten Kalibrierungsmusters.

Statt einer Kalibrierungstafel mit einem aufgedruckten Kalibrierungsmuster wird das Kalibrierungsmuster also von der Anzeigevorrichtung abgebildet. Somit sind herstellerspezifische Kalibriertafeln mit aufgedruckten Kalibrierungsmustern nicht mehr notwendig. Es kann außerdem schnell und unkompliziert zwischen verschiedenen Kalibrierungsmustern gewechselt werden.

Die Anzeigevorrichtung umfasst üblicherweise eine Steuer- und Verarbeitungseinheit und eine elektrisch gesteuerte Anzeigeeinheit. Vor dem Abbilden kann die Anzeigevorrichtung das Kalibrierungsmuster erhalten. Beispielsweise wird das Kalibrierungsmuster an die Anzeigevorrichtung übermittelt. Das Kalibrierungsmuster kann auch von einem Speicher abgerufen werden. Die Anzeigevorrichtung kann das Kalibrierungsmuster kann als Datei oder Bildsignal erhalten. Somit kann der Schritt des Erhaltens des Kalibrierungsmusters umfassen:
- Erhalten eines Bildsignals umfassend das Kalibrierungsmuster oder
- Erhalten einer Datei umfassend das Kalibrierungsmuster.

Beispielsweise kann die Datei von einem Speicher abgerufen werden, durch eine Kommunikationsvorrichtung an die Anzeigevorrichtung übermittelt werden oder von einem Server heruntergeladen werden. Vor dem Erhalten des Kalibrierungsmusters kann das Kalibrierungsmuster angefordert werden. Falls das Kalibrierungsmuster als Datei vorliegt und als Datei an die Anzeigevorrichtung übermittelt wird, kann die Datei in ein Bildsignal konvertiert werden. Die Anzeigevorrichtung umfasst beispielsweise Mittel zum Konvertieren des als Bilddatei vorliegenden Kalibrierungsmusters in ein Bildsignal. Das Kalibrierungsmuster kann z.B. als eine Bilddatei, wie eine Rastergraphik oder eine Vektorgraphik vorliegen. In anderen Varianten empfängt die Anzeigevorrichtung ein analoges oder digitales Bildsignal, welches das Kalibrierungsmuster umfasst. Typischerweise kann die Anzeigevorrichtung analoge und/oder digitale Bildsignale verarbeiten.

Das Kalibrierungsmuster wird typischerweise von einem Fahrzeugdiagnosegerät und/oder einem mobilen Endgerät (terminal) und/oder einem Server an die Anzeigevorrichtung geschickt. Wie oben erläutert, kann das Kalibrierungssignal als Bildsignal oder Datei an die Anzeigevorrichtung geschickt werden. Das Fahrzeugdiagnosegerät und/oder das mobile Endgerät und/oder der Server können drahtgebunden oder drahtlos mit der Anzeigevorrichtung verbunden sein.

Auf diese Weise können aktuelle Kalibrierungsmuster an die Anzeigevorrichtung übermittelt werden und durch die Anzeigevorrichtung abgebildet werden, sodass auch Fahrerassistenzsysteme von neu erschienenen Fahrzeugtypen problemlos kalibriert werden können.

Das Verfahren kann den folgenden Schritt aufweisen:
- Bestätigen, dass das Kalibrierungsmuster durch die Anzeigevorrichtung angezeigt wird.
Wenn das Kalibrierungsmuster erfolgreich durch die Anzeigevorrichtung abgebildet wird, kann die Anzeigevorrichtung eine Bestätigung an das Fahrzeugdiagnosegerät und/oder das mobile Endgerät und/oder den Server schicken. Weiterhin kann über eine Eingabe eines Benutzers bestätigt werden, dass das Kalibrierungsmuster durch die Anzeigevorrichtung angezeigt wird. Die Eingabe kann z.B. über eine am Fahrzeugdiagnosegerät und/oder am mobilen Endgerät vorgesehene Eingabeeinheit erfolgen.

Anschließend kann der Steuerbefehl an die Kamera geschickt werden. Alternativ wird der Steuerbefehl automatisch an die Kamera übermittelt, wenn die Anzeigevorrichtung das Kalibrierungsmuster erhalten hat, d.h. ohne explizite Bestätigung, vorzugsweise nach Ablauf einer bestimmten Zeit. Der Steuerbefehl wird beispielsweise durch die Anzeigevorrichtung, das Fahrzeugdiagnosegerät, das mobile Endgerät oder den Server an die Kamera geschickt. Beispielsweise kann der Steuerbefehl durch eine Steuereinheit der Anzeigevorrichtung, des Fahrzeugdiagnosegeräts, des mobilen Endgeräts oder des Servers generiert werden.

Zur Kommunikation mit der Kamera können die Anzeigevorrichtung und/oder das Fahrzeugdiagnosegerät und/oder das mobile Endgerät und/oder der Server drahtgebunden oder drahtlos mit der Kamera, dem Fahrerassistenzsystem und/oder einem Fahrzeugsteuergerät verbunden sein. Das Fahrerassistenzsystem und/oder das Fahrzeugsteuergerät können ausgebildet sein, den Steuerbefehl an die Kamera weiterzuleiten. Das Fahrzeugdiagnosegerät ist üblicherweise drahtgebunden über eine im Fahrzeug vorgesehene Fahrzeugdiagnoseschnittstelle mit dem Fahrzeugsteuergerät und/oder dem Fahrerassistenzsystem verbunden bzw. verbindbar.

Die Anzeigevorrichtung kann zum Beispiel einen Bildschirm zum Abbilden des Kalibrierungsmusters aufweisen. Der Bildschirm ist typischerweise eine elektrisch angesteuerte Anzeige ohne bewegliche Teile zur optischen Signalisierung von veränderlichen Informationen wie Bildern oder Zeichen. Der Bildschirm kann z.B. ein ELD (electroluminescent display), ein LCD (liquid crystal display), ein LED- (Licht emittierende Diode) Bildschirm, ein Plasmabildschirm oder Ähnliches sein.

Alternativ kann die Anzeigevorrichtung eine Anzeigetafel und einen Projektor zum Projizieren des Kalibrierungsmusters auf die Anzeigetafel aufweisen. Der Projektor kann z.B. ein Videoprojektor (auch als Bildwerfer, Digitalprojektor, Daten-Video-Projektor oder Beamer bekannt) sein. Der Projektor umfasst in der Regel eine Lichtquelle und verschiedene optische Elemente, wie z.B. Spiegel, Linsen und/oder Blenden, zum Abbilden des Kalibrierungsmusters auf der Anzeigetafel. Der Projektor kann z.B. als Rückstrahlbeamer ausgestaltet sein.

Es hat sich bei verschiedenen durch die Anmelderin durchgeführten Tests herausgestellt, dass mit der Anzeigetafel und dem Projektor bessere Ergebnisse erzielt werden können, als mit einer als Bildschirm ausgestalteten Anzeigevorrichtung.

Neben dem Kalibrierungsmuster können z.B. auch andere Bilder oder Videos durch die Anzeigevorrichtung dargestellt werden. Denkbar wären zum Beispiel Kalibrierungsanweisungen für einen Benutzer.

Wie oben bereits angedeutet, kann das Kalibrierungsmuster z.B. als Datei in einem Speicher gespeichert sein. In diesem Fall wird das Kalibrierungsmuster erhalten, indem es vom Speicher angefordert und/oder aus dem Speicher abgerufen wird. Der Speicher kann Bestandteil des Fahrzeugdiagnosegeräts und/oder des mobilen Endgeräts sein. Alternativ kann der Speicher in die Anzeigevorrichtung integriert sein. Der Speicher kann aber auch drahtgebunden (z.B. USB-Stick oder eine externe Festplatte mit angeschlossenem Kabel) oder drahtlos (z.B. über Bluetooth oder WLAN) mit der Anzeigevorrichtung verbunden werden.

Weiter kann eine Datenbank vorgesehen sein, welche mehrere Kalibrierungsmuster umfasst. Die Datenbank kann z.B. Teil des Speichers oder eines externen Servers (s. unten) sein.

Das Verfahren kann die folgenden Schritte umfassen:
- Anfordern des Kalibrierungsmusters und
- Erhalten des Kalibrierungsmusters z.B. von dem Speicher oder der Datenbank.

Falls das angeforderte Kalibrierungsmuster nicht im Speicher gespeichert ist oder wenn kein Speicher vorhanden ist, kann das Kalibrierungsmuster bei einer externen Stelle, wie einem Server mit einer Datenbank, angefordert und/oder heruntergeladen werden. Falls die Datenbank mehrere Kalibrierungsmuster umfasst, kann es vorteilhaft sein, Angaben über Fahrzeugdaten zu machen, da die Kalibrierungsmuster typischerweise vom Fahrzeugtyp und/oder Fahrzeughersteller und/oder Baujahr des Fahrzeuges abhängen. Die Fahrzeugdaten können also z.B. Fahrzeugtyp, Fahrzeughersteller und/oder Fahrzeugbaujahr umfassen.

Daher umfasst das Verfahren vorzugsweise die folgenden Schritte:
- Eingeben und/oder Übermitteln von Fahrzeugdaten, z.B. an die Datenbank, und
- Erhalten eines fahrzeugspezifischen Kalibrierungsmusters von der Datenbank.

Die Fahrzeugdaten können z.B. durch die Anzeigevorrichtung, das Fahrzeugdiagnosegerät, durch das Fahrzeugsteuergerät, das Fahrerassistenzsystem oder das mobile Endgerät übermittelt werden. Das fahrzeugspezifische Kalibrierungsmuster kann durch das Fahrzeugdiagnosegerät oder das mobile Endgerät empfangen werden, bevor es an die Anzeigevorrichtung übermittelt wird.

Vor dem Abbilden des Kalibrierungsbildes sollte die Anzeigevorrichtung in Bezug auf das Fahrzeug ausgerichtet und/oder positioniert werden. Beispielsweise wird die Anzeigevorrichtung vor dem Aufnehmen des Kalibrierungsmusters in Bezug auf das Fahrzeug ausgerichtet und/oder positioniert. Hiernach kann das durch die ausgerichtete und/oder positionierte Anzeigevorrichtung dargestellte Kalibrierungsmuster durch die Kamera des Fahrerassistenzsystems aufgenommen werden. Geeignete Verfahren zum Positionieren und Ausrichten sowie Positionierungsmittel bzw. Ausrichtungsmittel sind dem Fachmann bekannt und z.B. in folgenden Veröffentlichungen der Anmelderin gezeigt: DE 20 2015 008 954 U1, DE 10 2015 112 368 A1, DE 20 2016 103 584 U1, WO 2017/198264 A1, WO 2017/016541 A1, WO 2017/101912 A1, DE 20 2015 106 939 U1, deren Umfang mittels Referenzieren hiermit zum Bestandteil der vorliegenden Anmeldung gemacht wird.

Das Verfahren kann weiter die folgenden Schritte aufweisen:
- Bestimmen eines Abstandes, einer Position und/oder Ausrichtung der Anzeigevorrichtung in Bezug auf das Fahrzeug,
- Modifizieren des Kalibrierungsmusters in Abhängigkeit des Abstandes, der Position und/oder Ausrichtung der Anzeigevorrichtung zum Fahrzeug und
- Abbilden des modifizierten Kalibrierungsmusters.

Hierbei kann die Ausrichtung der Anzeigevorrichtung z.B. mithilfe mittels eines Ausrichtungssensors bestimmt werden. Der Ausrichtungssensor kann einen Beschleunigungsmesser, ein Gyroskop und einen Erdmagnetfeldsensor enthalten, welche jeweils präzise Beschleunigungs-, Winkelgeschwindigkeits-(gyroskopisch) und Erdmagnetfeld-Messungen in jeder Raumrichtung bieten können.

Für die Bestimmung der Position der Anzeigevorrichtung können ein Maßband und/oder ein Positionssensor verwendet werden, welcher z.B. einen induktiven Sensor, einen kapazitiven Sensor, einen Magnetsensor, einen Ultraschallsensor, einen opto-elektrischen Sensor, einen Lasersensor, einen Abstandssensor, eine GabelLichtschranke, eine Winkellichtschranke und/oder einen magnetischen Zylindersensor umfasst.

Für die Bestimmung des Abstandes der Anzeigevorrichtung zum Fahrzeug können ein Maßband und/oder ein Abstandssensor verwendet werden.

In vorteilhafter Weise umfasst das Verfahren außerdem den folgenden Schritt:
- Modifizieren einer Größe, Position und/oder Ausrichtung des Kalibrierungsmusters.

Die Anzeigevorrichtung kann das abzubildende Kalibrierungsmuster verschieben, drehen, verkleinern und/oder vergrößern. Dies kann z.B. durch eine Verstellung der Optik der Anzeigevorrichtung erfolgen. Alternativ oder zusätzlich kann eine digitale Bearbeitung des digital vorliegenden Kalibrierungsmusters vorgenommen werden. Zum Beispiel kann die Anzeigevorrichtung das Kalibrierungsmuster verschoben, gedreht, verkleinert oder vergrößert in Bezug auf eine Standardeinstellung abbilden.

Es ist daher nicht notwendig, die Anzeigevorrichtung in einem exakt rechten Winkel zur Fahrzeugachse auszurichten, da von einem rechten Winkel abweichende, räumliche Ausrichtungen der Anzeigevorrichtung beim Abbilden des Kalibrierungsmusters berücksichtigt werden können. Somit kann der Aufwand zum Positionieren und Ausrichten der Anzeigevorrichtung erheblich verringert werden. Falls die Anzeigevorrichtung auf einer unebenen Fläche steht, können diese Unebenheiten durch eine modifizierte Abbildung des Kalibrierungsmusters kompensiert werden.

Außerdem kann eine Eingabe- und Ausgabeeinheit vorgesehen sein. Die Eingabeeinheit kann z.B. Bestandteil der Anzeigevorrichtung, des Fahrzeugdiagnosegeräts und/oder des mobilen Endgeräts sein. Mit der Eingabe- und Ausgabeeinheit können z.B. den Abstand, die Position und/oder Ausrichtung der Anzeigevorrichtung in Bezug auf das Fahrzeug manuell eingegeben werden. Weiter können die Fahrzeugdaten manuell über die Eingabe- und Ausgabeeinheit eingegeben werden.

Das vorstehend beschriebene Verfahren wird also insbesondere durch Komponenten ausgeführt, welche nicht Bestandteil des Fahrzeuges sind.

Weiter sei angemerkt, dass die Anzeigevorrichtung, das mobile Endgerät, das Fahrzeugdiagnosegerät, der Server, die Kamera und das Fahrzeugsteuergerät voneinander getrennte, jedoch verbindbare (drahtlos und/oder drahtgebunden), Objekte sind. Das Fahrerassistenzsystem kann je nach Ausgestaltung getrennt vom Fahrzeugsteuergerät vorliegen oder das Fahrzeugsteuergerät umfassen oder mit dem Fahrzeugsteuergerät eine Einheit bilden.

Das Verfahren kann zudem folgende Schritte aufweisen:
- Aufnehmen des durch die Anzeigevorrichtung abgebildeten Kalibrierungsmusters durch die Kamera.
Dieser Schritt erfolgt typischerweise nachdem die Kamera den Steuerbefehl empfangen hat. Das durch die Kamera aufgenommene Kalibrierungsmuster kann dann zur Auswertung an das Fahrzeugsteuergerät und/oder das Fahrerassistenzsystem geschickt werden. Anschließend können folgende Schritte durchgeführt werden:
- Vergleichen des aufgenommenen Kalibrierungsmusters mit dem Kalibrierungsmuster und
- Kalibrieren der Kamera anhand des Vergleichs.
Die Vergleichs- und Kalibrierungsschritte können z.B. durch das Fahrerassistenzsystem und/oder das Fahrzeugsteuergerät im Fahrzeug durchgeführt werden. Die im Fahrzeug durchgeführten Kalibrierungsschritte ist bekannt aus dem Stand der Technik, weshalb hier auf eine detaillierte Beschreibung der Kalibrierung verzichtet wird.

Das Kalibrierungsmuster ist typischerweise in einem fahrzeugseitigen Speicher hinterlegt und wird in der Regel durch das Fahrzeugsteuergerät und/oder das Fahrerassistenzsystem mit dem aufgenommenen Bild des Kalibrierungsmuster verglichen, um die Kalibrierung der Kamera durchzuführen.

Externe Komponenten, wie das Fahrzeugdiagnosegerät, das mobile Endgerät, der Server und die Anzeigevorrichtung, welche keine Bestandteile des Fahrzeuges sind, haben in der Regel keinen Zugriff auf das im fahrzeugseitigen Speicher hinterlegte Kalibrierungsmuster. Sie können aber mittels des Steuerbefehls die Kalibrierung der Kamera einleiten und sind als solche auch Teil des Kalibrierungsprozesses.

Außerdem wird mit der vorliegenden Erfindung ein zweites Verfahren zur Kalibrierung mindestens einer Kamera eines Fahrerassistenzsystems bereitgestellt. Das Verfahren umfasst die folgenden Schritte:
- Übermitteln eines Kalibrierungsmusters an eine Anzeigevorrichtung zum Abbilden des Kalibrierungsmusters und
- Übermitteln eines Steuerbefehls an die Kamera zum Aufnehmen des durch die Anzeigevorrichtung abgebildeten Kalibrierungsmusters.

Das zweite Verfahren kann beispielsweise durch das Fahrzeugdiagnosegerät, das mobile Endgerät und/oder den Server durchgeführt werden, insbesondere durch einen externen Server, welcher z.B. außerhalb der Werkstatt angeordnet ist, wo sich die Anzeigevorrichtung und das Fahrzeug zu Kalibrierungszwecken befinden. Das Verfahren eignet sich insbesondere für eine Fernkalibrierung (remote calibration) des Fahrerassistenzsystems. Der Server kann eine Datenbank aufweisen, welche eine Vielzahl von Kalibrierungsmustern umfasst. Das zweite Verfahren kann insbesondere mit dem zuvor beschriebenen ersten Verfahren kombiniert werden.

Falls notwendig, kann ein Steuerbefehl an die Anzeigevorrichtung zum Abbilden des Kalibrierungsmusters geschickt werden.

Das Verfahren kann außerdem folgende Schritte umfassen:
- Erhalten von Fahrzeugdaten,
- Abgleichen der Fahrzeugdaten mit einer Datenbank, wobei die Datenbank Fahrzeugdaten und zugeordnete fahrzeugspezifische Kalibrierungsmuster enthält, und
- Übermitteln des fahrzeugspezifischen Kalibrierungsmusters an die Anzeigevorrichtung.

Vor dem Erhalt der Fahrzeugdaten kann eine Anforderung zum Übermitteln der Fahrzeugdaten geschickt werden. Die Fahrzeugdaten können nach Eingabe eines Benutzers an den Server geschickt werden. Alternativ oder zusätzlich werden die Fahrzeugdaten durch ein Fahrzeugdiagnosegerät oder ein mobiles Endgerät an den Server geschickt.

Es sei angemerkt, dass einzelne Schritte des erstes Verfahrens und des zweiten Verfahrens können miteinander kombiniert werden.

Des Weiteren wird eine Vorrichtung zum Kalibrieren mindestens einer Kamera eines Fahrerassistenzsystems vorgeschlagen. Die Vorrichtung umfasst
- eine Anzeigevorrichtung zum Abbilden eines Kalibrierungsmusters,
- eine erste Kommunikationseinheit ausgebildet zum Übermitteln eines Steuerbefehls zum Aufnehmen des durch die Anzeigevorrichtung abgebildeten Kalibrierungsmusters an die Kamera.

Hierbei kann die Anzeigevorrichtung einen Bildschirm zum Anzeigen des Kalibrierungsmusters oder eine Anzeigetafel und einen Projektor zum Projizieren des Kalibrierungsmusters auf die Anzeigetafel umfassen (s. auch oben).

Die Vorrichtung kann mindestens eine Steuereinheit aufweisen. Die Steuereinheit kann Bestandteil der Anzeigevorrichtung, eines Fahrzeugdiagnosegeräts, eines Servers, und/oder eines mobilen Endgeräts sein (vgl. obige Ausführungen). Die Steuereinheit kann zum Generieren eines Steuerbefehls zum Aufnehmen des Kalibrierungsmusters ausgestaltet sein. Die Vorrichtung kann weiter einen Speicher mit einer ersten Datenbank aufweisen, welche eine Vielzahl von Kalibrierungsmustern aufweist. Der Speicher kann Bestandteil der Anzeigevorrichtung, des Fahrzeugdiagnosegeräts, des Servers und/oder des mobilen Endgeräts sein (vgl. obige Ausführungen). Die Anzeigevorrichtung kann Mittel zum Erhalten eines Kalibrierungsmusters umfassen. Optional kann die Anzeigevorrichtung die erste Kommunikationseinheit aufweisen. In diesem Fall kann es vorgesehen sein, dass die erste Kommunikationseinheit zum Empfangen des Kalibrierungsmusters ausgestaltet ist.

Die Vorrichtung kann außerdem eine Eingabe- und Ausgabeeinheit für eine Kommunikation mit einem Benutzer aufweisen. Über die Eingabe- und Ausgabeeinheit können z.B. Befehle, Daten, Eingaben und/oder Anfragen eingegeben werden. Die Eingabe- und Ausgabeeinheit kann Bestandteil des Fahrzeugdiagnosegeräts und/oder des mobilen Endgeräts und/oder der Anzeigevorrichtung sein.

Die erste Kommunikationseinheit ist vorzugsweise zum Kommunizieren mit einem Fahrerassistenzsystem und/oder einem Fahrzeugsteuergerät ausgestaltet. Die erste Kommunikationseinheit kann zum Übermitteln von Daten an das Fahrzeugsteuergerät und/oder das Fahrerassistenzsystem und/oder einen Server ausgebildet sein. Hierzu kann in manchen Ausführungsformen eine fahrzeugseitige Kommunikationsschnittstelle vorgesehen sein, welche zur Kommunikation einerseits mit dem Fahrzeugsteuergerät und/oder dem Fahrerassistenzsystem verbunden bzw. verbindbar ist und andererseits mit der ersten Kommunikationseinheit verbindbar bzw. verbunden ist. Die Verbindung kann hierbei drahtlos oder drahtgebunden sein. Die Kommunikationsschnittstelle kann somit eine Kommunikation zwischen der ersten Kommunikationseinheit und dem Fahrzeugsteuergerät oder der ersten Kommunikationseinheit und dem Fahrerassistenzsystem ermöglichen. Die Kommunikationsschnittstelle kann ein vehicle communication interface (VCI) oder eine OBD-Schnittstelle (on-board diagnostics) sein. In manchen Ausführungsformen kann das VCI ausgestaltet sein, mit der OBD-Schnittstelle verbunden zu werden.

Weiter kann die erste Kommunikationseinheit zum Empfangen von Daten von dem Fahrzeugsteuergerät und/oder dem Fahrerassistenzsystem und/oder von dem Server ausgebildet sein. Vorzugsweise weist die erste Kommunikationseinheit eine Sende- und Empfangseinheit auf, welche eine bidirektionale Kommunikation ermöglicht. Die erste Kommunikationseinheit kann für eine drahtlose und/oder eine drahtgebundene Kommunikation ausgelegt sein.

Die Vorrichtung kann ein Fahrzeugdiagnosegerät umfassen, welches vorzugsweise die Eingabe- und Ausgabeeinheit, die erste Kommunikationseinheit, den Speicher und/oder die Steuer- und Verarbeitungseinheit aufweist. Zusätzlich oder alternativ kann die Vorrichtung mindestens ein mobiles Endgerät aufweisen. Das mobile Endgerät kann die Steuervorrichtung, die erste Kommunikationseinheit, die Eingabe- und Ausgabeeinheit und/oder den Speicher aufweisen. Das mobile Endgerät kann z.B. ein Tablet, ein Mobiltelefon, ein Smartphone, ein Laptop und/oder ein Notebook sein. Derartige Geräte verfügen in der Regel über eine Eingabe- und Ausgabeeinheit, eine Kommunikationseinheit, einen Speicher und/oder eine Steuer- und Verarbeitungseinheit. In einer Ausführungsform sind sowohl das Fahrzeugdiagnosegerät als auch das mobile Endgerät vorgesehen. In diesem Fall können also mindestens zwei Eingabe- und Ausgabeeinheiten, mindestens zwei Speicher, mindestens zwei Kommunikationseinheiten und/oder mindestens zwei Steuer- und Verarbeitungseinheiten vorgesehen sein.

Die Vorrichtung kann Mittel zum Bestimmen eines Abstands und/oder einer Position und/oder Ausrichtung der Anzeigevorrichtung zum Fahrzeug aufweisen, wie beispielsweise entsprechende Sensoren (s. oben) und/oder ein Maßband oder Ähnliches. Außerdem können Positionierungsmittel und/oder Ausrichtungsmittel zum Positionieren bzw. Ausrichten der Anzeigevorrichtung in Bezug auf das Fahrzeug vorgesehen sein. Beispielsweise kann die Vorrichtung mindestens einen Radaufnehmer zum Bestimmen einer Position und/oder Ausrichtung der Anzeigevorrichtung zum Fahrzeug haben. Hierbei kann der Radaufnehmer an einem Rad des Fahrzeuges befestigbar sein. Wie oben angedeutet, sind derartige Positionierungsmittel und/oder Ausrichtungsmittel hinreichend aus dem Stand der Technik bekannt. Es wird an dieser Stelle auf die oben zitierten Druckschriften verwiesen.

Die Vorrichtung ist insbesondere zum Durchführen des oben beschriebenen ersten Verfahrens ausgelegt.

Mit der Erfindung wird außerdem ein Server bereitgestellt. Der Server umfasst eine zweite Kommunikationseinheit, eine mit der zweiten Kommunikationseinheit verbundene zweite Steuer- und Verarbeitungseinheit und eine zweite Datenbank, wobei die zweite Datenbank eine Vielzahl von Kalibrierungsmustern umfasst. Die zweite Kommunikationseinheit ist ausgebildet zum
- Übermitteln des Kalibrierungsmusters an eine Anzeigevorrichtung zum Abbilden des Kalibrierungsmusters und
- Übermitteln eines Steuerbefehls an die Kamera zum Aufnehmen des durch die Anzeigevorrichtung abgebildeten Kalibrierungsmusters.

Die zweite Kommunikationseinheit kann außerdem einen Steuerbefehl an die Anzeigevorrichtung zum Abbilden des Kalibrierungsmusters übermitteln.

Der Server ist insbesondere zum Durchführen des ersten Verfahrens und/oder des zweiten Verfahrens ausgestaltet.

Es wird zudem ein System vorgeschlagen, welches die oben beschriebene Vorrichtung und den oben beschriebenen Server enthält. Beispielsweise schickt die zweite Kommunikationseinheit des Servers den Steuerbefehl an die erste Kommunikationseinheit der Vorrichtung, welche den Steuerbefehl dann an die Kamera weiterleitet.

Die in dieser Schrift genannten Steuergeräte, Steuereinheiten oder Steuer- und Verarbeitungseinheiten können z.B. Prozessoren, Mikroprozessoren, Controller oder Mikrocontroller sein oder umfassen.

Aus der obigen Darstellung ergibt sich, dass die Verfahren insbesondere durch die beschriebenen Vorrichtung, den Server und das System durchgeführt werden können. Es sei an dieser Stelle betont, dass Merkmale, die nur in Bezug auf die Vorrichtung, den Server oder das System genannt wurden, auch für die genannten Verfahren beansprucht werden können und anders herum. Es versteht sich, dass die oben beschriebenen Ausführungsformen miteinander kombiniert werden können, sofern sich die Kombinationen nicht gegenseitig ausschließen.

Im Folgenden werden Ausführungsformen der Erfindung anhand beigefügter Zeichnungen näher erläutert. Hierbei sind die Figuren schematisiert und teilweise vereinfacht. Es zeigen:
- Fig. 1: eine schematische Darstellung eines Fahrzeugs sowie verschiedener Komponenten einer Vorrichtung und eines Systems zur Kalibrierung eines Assistenzfahrersystems,
- Fig. 2: eine schematische Darstellung eines Fahrzeug sowie verschiedener Komponenten einer Vorrichtung und eines Systems zur Kalibrierung eines Assistenzfahrersystems,
- Fig. 3: eine schematische Darstellung eines Fahrzeug sowie verschiedener Komponenten einer Vorrichtung und eines Systems zur Kalibrierung eines Assistenzfahrersystem,
- Fig. 4: eine Anzeigevorrichtung in einer Frontalansicht,
- Fig. 5: eine weitere Anzeigevorrichtung in einer Frontalansicht,
- Fig. 6: eine Seitenansicht der Anzeigevorrichtung der Fig. 5 und eines vor der Anzeigevorrichtung positionierten Fahrzeuges und
- Fig. 7: eine perspektivische Ansicht der Anzeigevorrichtung der Fig. 5 und eines vor der Anzeigevorrichtung positionierten Fahrzeuges.

In den Figuren sind wiederkehrende Merkmale mit denselben Bezugszeichen versehen.

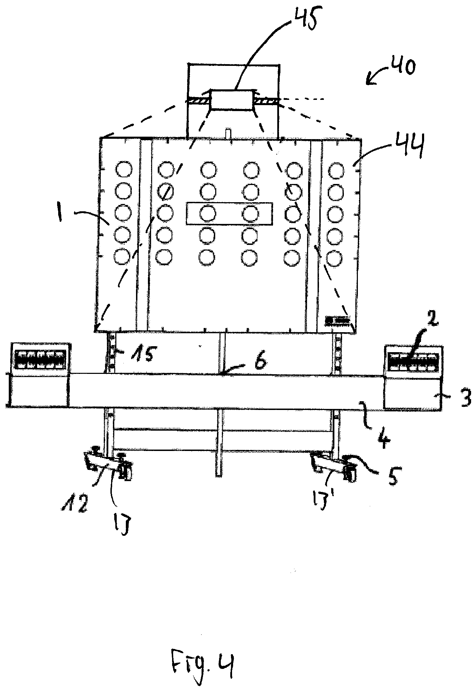

Zunächst wird auf die Figuren 4-7 Bezug benommen.

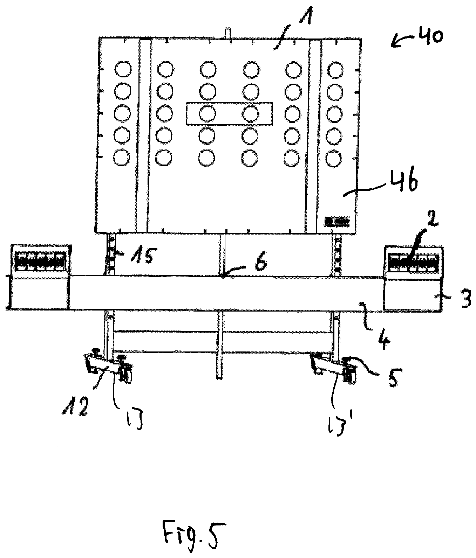

In den Figuren 4-7 ist eine Anzeigevorrichtung 40 einer Kalibrierungsvorrichtung 10 zum Kalibrieren mindestens einer Kamera 65 eines Fahrerassistenzsystems 64 gezeigt. Die Anzeigevorrichtung 40 ist zum Abbilden eines Kalibrierungsmusters 1 ausgebildet. Die Anzeigevorrichtung 40 umfasst eine elektrisch gesteuerte optische Anzeigeeinheit, wobei die optische Anzeigeeinheit in der Fig. 4 eine Anzeigetafel 44 und einen Projektor 45 zum Projizieren des Kalibrierungsmusters 1 auf die Anzeigetafel 44 einschließt, und die optische Anzeigeeinheit in der Fig. 5 als Bildschirm 46 ausgestaltet ist.

Der Projektor 45 kann z.B. eine Lichtquelle und verschiedene optische Elemente, wie z.B. Spiegel, Linsen und/oder Blenden, zum Abbilden des Kalibrierungsmusters 1 auf der Anzeigetafel 44 umfassen. In einer Ausführungsform ist der Projektor 45 als Rückstrahlbeamer ausgestaltet.

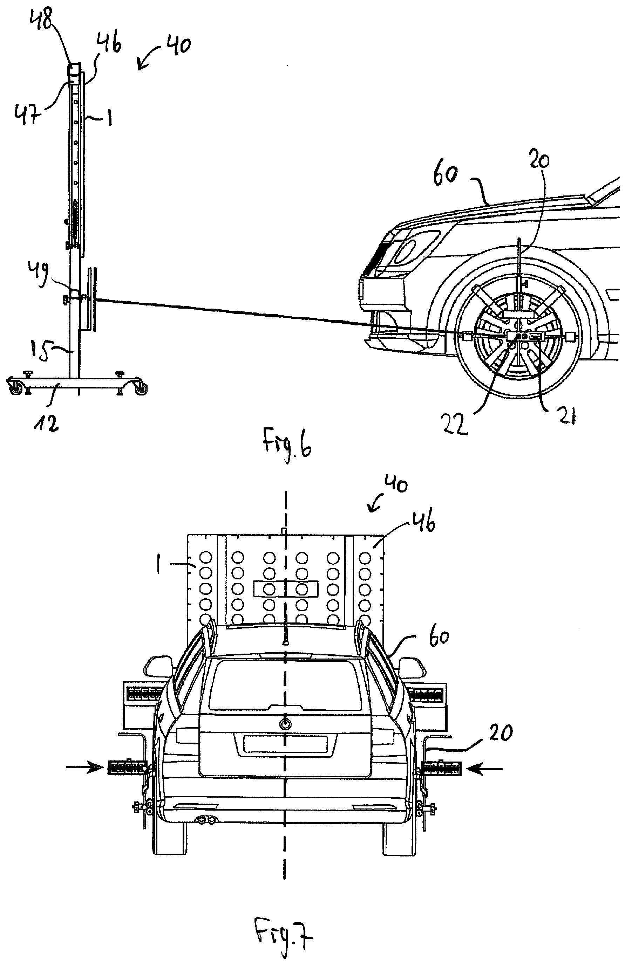

Gemäß der Darstellung in Figuren 4 und 5 kann die Anzeigevorrichtung 40 an einem Haltegestell 15 befestigt sein. Das Haltegestell 15 steht vorzugsweise auf einem mit vier Rädern versehenen Fahrgestell 12. Weiter ist üblicherweise in dem Bereich zwischen der Kalibrierungstafel 1 und dem Fahrgestell 12 ein waagerecht angeordneter Justagebalken 4 vorgesehen, der sich beidseitig über die optische Anzeigeeinheit 44, 45, 46 seitlich hinaus erstreckt. Der Justagebalken 4 ist an seinen beidseitigen Endbereichen jeweils mit einer Justagebalken-Skala 2 sowie einem Justagebalken-Spiegel 3 bestückt. Mithilfe des Justagebalkens 4 kann die Anzeigevorrichtung 40 in Bezug auf ein Fahrzeug 60 positioniert und/oder ausgerichtet werden (s. auch Fig. 6).

Weiter kann das Fahrgestell 12 mit vier Stellschrauben 5 bestückt sein, die jeweils in einer Gewindebohrung der einander parallel angeordneten Längsschienen 13, 13' des Fahrgestells 12 derart angeordnet sind, dass sie bestimmungsgemäß verstellbar auf dem Aufstellgrund des Fahrgestells 12 aufstehen. Mittels dieser Stellschrauben 5 kann die optische Anzeigeeinheit 44, 45, 46 kann so ausgerichtet werden kann, dass deren Oberkante waagerecht und deren Seitenkanten jeweils senkrecht stehen. Die korrekte Ausrichtung der optischen Anzeigeeinheit 44, 45, 46 kann mittels einer auf dem Justagebalken 4 angeordneten Justagebalken-Libelle 6 überprüft werden, da der Justagebalken 4 ebenfalls waagerecht ausgerichtet ist.

Die Anzeigetafel 44 der Fig. 4 und der Bildschirm 46 der Fig. 5 können höhenverstellbar an dem Haltegestell 15 befestigt sein. Beispielsweise können die Anzeigetafel 44 und der Bildschirm 46 jeweils in einer bestimmungsgemäßen Höhe mittels einer Feststellschraube fixiert werden.

Als weiteres Hilfsmittel zum Ausrichtung und Positionieren der Anzeigetafel 44 bzw. des Bildschirms 46 in Bezug auf das Fahrzeug 60 können zwei einander identisch ausgebildete Radaufnehmer 20 vorgesehen sein, s. Figuren 6 und 7. Die Radaufnehmer 20 können an den Vorderrädern oder Hinterrädern des Fahrzeuges 60 befestigt werden und umfassen z.B. jeweils einen Laser 21 zum Bestimmen einer Position der Anzeigevorrichtung 40 zum Fahrzeug 60.

Wie die Anzeigevorrichtung 40 mit der Anzeigetafel 44 oder dem Bildschirm 46 im Einzelnen in Bezug auf das Fahrzeug 60 ausgerichtet und positioniert werden kann, ist beispielsweise in der Veröffentlichung DE 10 2015 112 368 A1 offenbart. In der DE 10 2015 112 368 A1 eine Kalibrierungstafel ausgerichtet und positioniert, welche der Anzeigetafel 44 bzw. dem Bildschirm 46 der vorliegenden Anmeldung in Bezug auf Form und Funktion ähnelt. Außerdem werden in der DE 10 2015 112 368 A1 werden weitere Details zu den Radaufnehmern 20 und ihren Funktionen erläutert.

Weiter kann die Anzeigevorrichtung 40 einen Ausrichtungssensor 47 und/oder einen Positionssensor 48 und/oder einen Abstandssensor 49 (s. Fig. 6) und/oder ein Maßband zur Abstandsmessung aufweisen.

Mit dem Ausrichtungssensor 47 kann eine relative oder absolute Ausrichtung der Anzeigevorrichtung 40 bestimmt werden. Der Ausrichtungssensor 48 kann z.B. einen Beschleunigungsmesser, ein Gyroskop und einen Erdmagnetfeldsensor enthalten, welche jeweils präzise Beschleunigungs-, Winkelgeschwindigkeits- (gyroskopisch) und Erdmagnetfeld-Messungen in jeder Raumrichtung bieten können.

Für die Bestimmung der Position der Anzeigevorrichtung 40 in Bezug auf das Fahrzeug 60 (links, zentriert oder rechts) kann der Positionssensor 48 verwendet werden, welcher z.B. einen induktiven Sensor, einen kapazitiven Sensor, einen Magnetsensor, einen Ultraschallsensor, einen opto-elektrischen Sensor, einen Lasersensor, einen Abstandssensor, eine Gabellichtschranke, eine Winkellichtschranke und/oder einen magnetischen Zylindersensor umfasst. Ähnliche Sensoren können auch für den Abstandssensor 49 verwendet werden. Der Abstandssensor 49 wird verwendet, um einen Abstand der Anzeigevorrichtung 40 zum Fahrzeug 60 zu bestimmen. Alternativ oder zusätzlich kann ein Maßband zum Bestimmen des Abstandes und/oder der Position der Anzeigevorrichtung 40 zum Fahrzeug verwendet werden. Die Ausrichtung der Anzeigevorrichtung 40 kann mithilfe mindestens einer Libelle vorgenommen werden.

Somit kann mithilfe der oben beschriebenen Hilfsmittel, der in der DE 10 2015 112 368 A1 offenbarten Hilfsmittel und/oder weiterer Hilfsmittel sichergestellt werden, dass die Anzeigevorrichtung 40 derart vor einem Fahrzeug 60 positioniert und ausgerichtet werden kann, dass eine Kalibrierung einer Kamera 65 eines Fahrerassistenzsystems 64 durchgeführt werden kann. Insbesondere kann die Anzeigevorrichtung 40 in einem definierten Abstand und mittig vor dem Fahrzeug 60 sowie im rechten Winkel zur Fahrzeugslängsachse positioniert werden.

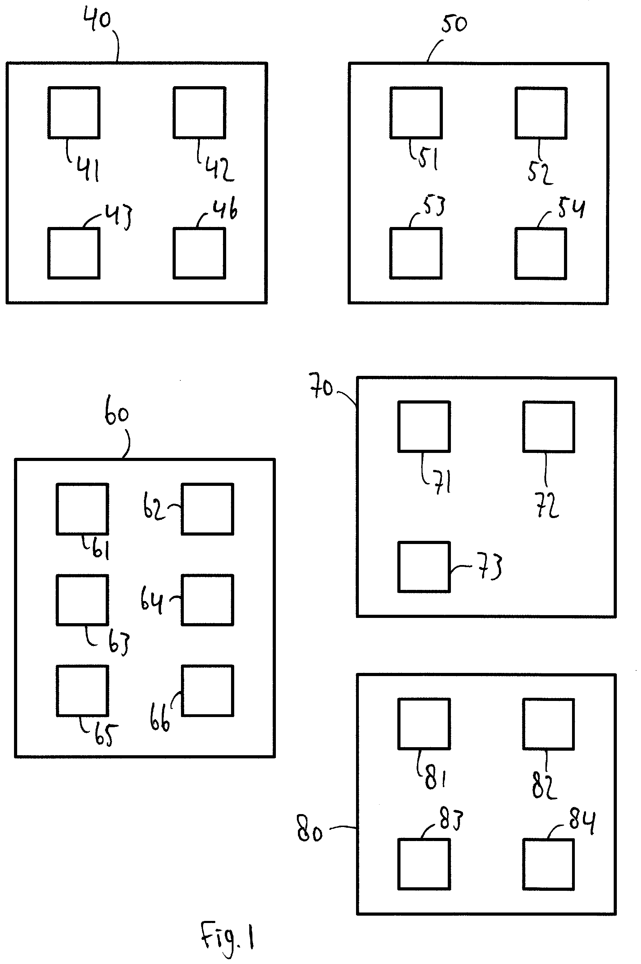

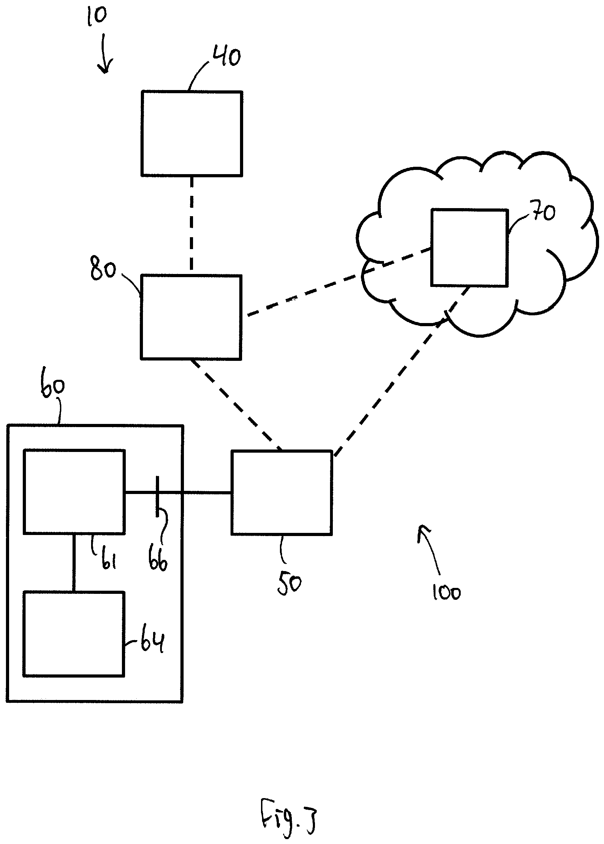

Die Figuren 1-3 zeigen die Anzeigevorrichtung 40, ein Fahrzeugdiagnosegerät 50, ein Fahrzeug 60 und einen Server 70. Weiter ist in den Figuren 1 und 3 zusätzlich ein mobiles Endgerät 80 dargestellt.

Manche der in der Figur 1 dargestellten Komponenten 40, 50, 70, 80 sind Bestandteile einer Kalibrierungsvorrichtung 10 bzw. eines Systems 100 zur Kalibrierung eines Fahrerassistenzsystems 64. Die Vorrichtung 10, der Server 70 und das System 100 können insbesondere zur Umsetzung der weiter unten beschriebenen Verfahren eingesetzt werden.

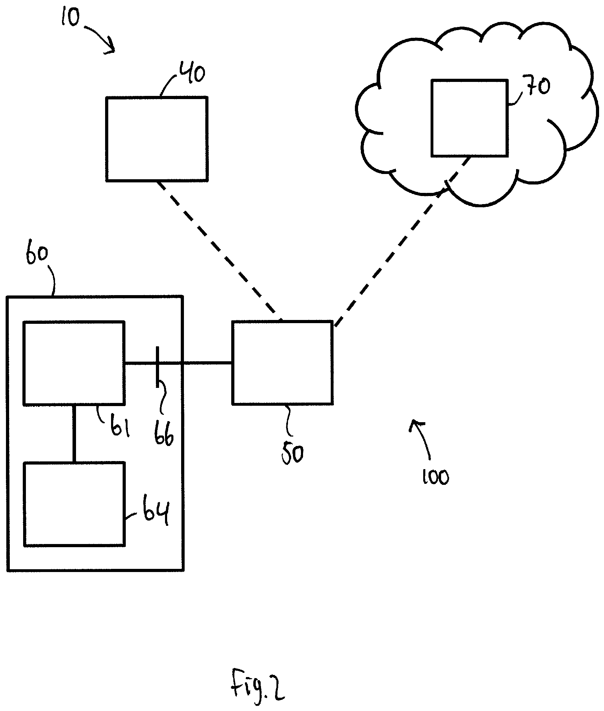

Zunächst wird von den Figuren 1 und 2 ausgegangen. Die Figuren 1 und 2 zeigen ein Fahrzeug 60, in dem ein Fahrzeugsteuergerät 61, welches auch als ECU bekannt ist, eine Kommunikationseinheit 62, ein Speicher 63, ein Fahrerassistenzsystem 64, eine Kamera 65 und eine Diagnoseschnittstelle 66 vorgesehen sein können.

Die Diagnoseschnittstelle 66 wird manchmal auch OBD-Schnittstelle (On-Board-Diagnostics-Schnittstelle) genannt. In der Regel befindet sich die Fahrzeugdiagnoseschnittstelle 66 in einem Fußraum des Fahrzeuges 60 und ist als Steckdose ausgelegt. Die Fahrzeugdiagnoseschnittstelle 66 ist mit mindestens einem sich im Fahrzeug 60 befindlichen Fahrzeugsteuergerät 61 über entsprechende Signalleitungen verbunden. Das Fahrzeugsteuergerät 61 ist wiederum mit mindestens einer Kamera 65 eines Fahrerassistenzsystems 64 verbunden, welcher dazu auslegt ist, Bilder einer direkten Umgebung des Fahrzeuges 60 zu erfassen. Die mindestens eine Kamera 65 kann z.B. in oder an einer Windschutzscheibe des Fahrzeuges 60 angeordnet sein.

Die Funktionsweise des Fahrerassistenzsystems 64, der Kamera 65 und des Fahrzeugsteuergeräts 61 und die Kommunikation zwischen der Fahrerassistenzsystems 64 und dem Fahrzeugsteuergerät 61 sind aus dem Stand der Technik bekannt und werden im Folgenden nur kurz umrissen. Die Kamera 65 kann ausgestaltet sein, in regelmäßigen zeitlichen Abständen Bilder aufzunehmen. Die Kamera 65 kann auch ausgestaltet sein, nach Empfang eines Steuerbefehls Bilder aufzunehmen. Die Kamera 65 bekommt den Steuerbefehl in der Regel vom Fahrzeugsteuergerät 61. Das Fahrzeugsteuergerät 61 kann ausgestaltet sein, den Steuerbefehl von einer anderen Einheit zu empfangen und an die Kamera 65 weiterzuleiten. Die Kamera 65 kann die Bilder in regelmäßigen zeitlichen Abständen an das Fahrzeugsteuergerät 61 schicken, wo sie anschließend ausgewertet werden. Die digitalen Bilder können durch das Fahrzeugsteuergerät 61 auch an weitere Einheiten weitergeleitet werden. Die aufgenommenen Bilder können in dem dazu ausgelegten Speicher 63 des Fahrzeuges 60 zwischengespeichert oder dauerhaft gespeichert werden.

Weiter zeigt die Fig. 2 eine Kalibrierungsvorrichtung 10 zum Kalibrieren der Kamera 65 des Fahrerassistenzsystems 64. Die Vorrichtung 10 umfasst die Anzeigevorrichtung 40 und das Fahrzeugdiagnosegerät 50.

Die Anzeigevorrichtung 40 wurde bereits im Zusammenhang mit den Figuren 4-7 beschrieben. Die Fig. 1 zeigt schematisch nochmals die Anzeigevorrichtung 40 der Figuren 4-7, welche eine Steuer- und Verarbeitungseinheit 41, eine Kommunikationseinheit 42, einen Speicher 43 und den Bildschirm 46 aufweisen kann. Wie in Zusammenhang mit der Figur 4 erläutert, können anstelle des Bildschirms 46 auch die Anzeigetafel 44 und der Projektor 45 vorgesehen sein. Typischerweise kann die Steuereinheit 41 der Anzeigevorrichtung 40 analoge und/oder digitale Bildsignale verarbeiten.

Weiter zeigt die Fig. 1 ein Fahrzeugdiagnosegerät 50, welches eine Steuer- und Verarbeitungseinheit 51, eine Kommunikationseinheit 52, einen Speicher 53 sowie eine Eingabe- und Ausgabeeinheit 54 für eine Kommunikation mit einem Benutzer umfassen kann. Fahrzeugdiagnosegeräte 50 sind aus dem Stand der Technik bekannt. Üblicherweise kann das Fahrzeugdiagnosegerät 50 mittels Signalleitungen an die Fahrzeugdiagnoseschnittstelle 66 des Fahrzeuges 60 angeschlossen werden. Das Fahrzeugdiagnosegerät 50 weist typischerweise einen Stecker auf, der mit der Fahrzeugdiagnoseschnittstelle 66 kompatibel ist. Beim Verbinden des Steckers mit der Fahrzeugdiagnoseschnittstelle 66 werden beide elektrisch und mechanisch miteinander verbunden.

Wie bereits hinreichend aus dem Stand der Technik bekannt, kann das Fahrzeugsteuergerät 50 dazu ausgestaltet sein, im Fahrzeug gespeicherte Fehlercodes (diagnostic trouble code, DTC) auszulesen. Hiernach können die Fehlercodes durch das Fahrzeugdiagnosegerät 50 analysiert werden, um zu diagnostizieren, ob und welche Fahrzeugkomponenten repariert oder ersetzt werden müssen, um das Problem zu beheben. Somit kann mittels einer Auswertung der Fehlercodes (Fahrzeugdiagnose) eine Aussage darüber getroffen werden, welche Fahrzeugkomponenten defekt sind und eine Reparatur benötigen.

Typischerweise umfasst die Kommunikationseinheit 52 des Fahrzeugdiagnosegeräts eine erste Sende- und Empfangseinheit (nicht dargestellt), welche für die drahtgebundene Kommunikation mit dem Fahrzeugsteuergerät 61 ausgelegt ist. Weiter kann die Kommunikationseinheit 52 z.B. eine zweite Sende- und Empfangseinheit (nicht dargestellt) zum drahtlosen Kommunizieren mit der Anzeigevorrichtung 40 (bzw. der Kommunikationseinheit 42 der Anzeigevorrichtung 40) umfassen, welche typischerweise gemäß einem vorbekannten Funkstandard oder Funkprotokoll arbeitet. Die erste Sende- und Empfangseinheit und die zweite Sende- und Empfangseinheit des Fahrzeugdiagnosegeräts 50 können miteinander verbunden sein, entweder direkt oder über die Steuereinheit 51, wie einen Prozessor oder einen Controller. Die Steuereinheit 51 des Fahrzeugdiagnosegeräts 50 kann eine Kommunikation zwischen der ersten Sende- und Empfangseinheit und der zweiten Sende- und Empfangseinheit des Fahrzeugdiagnosegeräts 50 steuern.

Insbesondere kann die Kommunikationseinheit 52 (bzw. die zweite Sende- und Empfangseinheit der Kommunikationseinheit 52) eine Bluetooth-Einheit, eine WLAN (z.B. gemäß IEEE 802.11) oder eine anderes Einheit aufweisen, die ausgelegt ist, über eine Nahfeldverbindung mit der Kommunikationseinheit 42 der Anzeigevorrichtung 40 zu kommunizieren. Andersartige drahtlose Verbindungen wie EnOcean, Z-Wave, ZigBee, WiMAX, UMTS / HSDPA, LTE (long term evolution), NanoNetm, UWB (Ultra Wideband), NB-loT (Narrowband Internet of Things), Sigfox oder LoRa sind ebenfalls für die Kommunikation der ersten Kommuni-kationseinheit möglich und sind dem Fachmann bekannt. Alternativ kann das Fahrzeugdiagnosegerät 50 auch drahtgebunden mit der Anzeigevorrichtung 40 kommunizieren. Die Sende- und Empfangseinheiten 52, 42 sind also dazu ausgelegt, drahtlos oder drahtgebunden miteinander zu kommunizieren.

Die Kommunikationseinheit 52 kann ausgebildet sein, einen Steuerbefehl zum Aufnehmen des durch die Anzeigevorrichtung 40 abgebildeten Kalibrierungsmusters 1 an die Kamera 65 zu übermitteln. Außerdem kann die Kommunikationseinheit 52 zum Übermitteln oder Weiterleiten des Kalibrierungsmusters 1 an die Anzeigevorrichtung 40 ausgestaltet sein.

In einer Ausführungsform weisen der Speicher 43 und/oder der Speicher 53 eine Datenbank auf, welche eine Vielzahl von Kalibrierungsmustern 1 umfasst.

Weiter ist in Figuren 1-3 ein Server 70 dargestellt. Der Server 70 kann z.B. eine Steuer- und Verarbeitungseinheit 71, eine Kommunikationseinheit 72 und eine Datenbank 73 aufweisen. In der Datenbank 73 ist vorzugsweise eine Vielzahl von Kalibrierungsmustern gespeichert. Außerdem sind zugehörige Fahrzeugdaten, wie Fahrzeugtyp, Fahrzeughersteller und/oder Baujahr des Fahrzeuges 60, in der Datenbank 73 gespeichert.

Die Kommunikationseinheit 72 kann ausgebildet sein zum Übermitteln des Kalibrierungsmusters 1 an die Anzeigevorrichtung 40. Zudem kann die Kommunikationseinheit 72 ausgestaltet sein, einen Steuerbefehl zum Aufnehmen des durch die Anzeigevorrichtung 40 abgebildeten Kalibrierungsmusters 1 an die Kamera 65 zu übermitteln.

Die Kommunikationseinheit 52 des Fahrzeugdiagnosegeräts 50 kann weiter für eine Kommunikation mit der Kommunikationseinheit 72 des Servers 70 ausgelegt sein. Die Kommunikation des Fahrzeugdiagnosegeräts 50 mit dem Server 70 kann drahtgebunden und/oder drahtlos ausgestaltet sein. Hierbei ist dem Fachmann geläufig, dass die Kommunikation mit der Kommunikationseinheit 72 des Servers 70 über zwischengeschaltete Netzwerkkomponenten, wie z.B. Basisstationen und/oder weitere Server, statt finden kann.

Die Steuereinheit 51 des Fahrzeugdiagnosegeräts 50 kann ausgelegt sein, empfangene Daten vom Server 70 und/oder vom Fahrzeugsteuergerät 61 zu verarbeiten oder zu bearbeiten. Falls notwendig, können Daten in einem dazu ausgelegten Speicher 53 zwischengespeichert oder gepuffert werden, bevor sie an eine weitere Komponente weitergeleitet werden. Im Speicher 53 kann ein Programm zur Ansteuerung der elektronischen Komponenten des Fahrzeugdiagnosegeräts 50 gespeichert sein.

Der Server 70 und die Vorrichtung 10 bilden zusammen ein System 100, welches insbesondere zum Kalibrieren der Kamera 65 geeignet und/oder ausgestaltet ist.

Anstelle des Fahrzeugdiagnosegeräts 50 kann auch eine Fahrzeugkommunikationsschnittstelle (vehicle communication interface - VCI, nicht dargestellt) mit der Fahrzeugdiagnoseschnittstelle 66 verbunden werden. Die Fahrzeugkommunikationsschnittstelle kann zum Beispiel ein Adapter sein, welcher einen Stecker zum mechanischen und elektrischen Verbinden mit der Fahrzeugdiagnoseschnittstelle 66 aufweist. Weiter kann der Adapter eine Kommunikationseinheit zum Kommunizieren mit der Kommunikationseinheit 42 der Anzeigevorrichtung 40 und/oder der Kommunikationseinheit 72 des Servers aufweisen. Der Adapter kann insbesondere ausgebildet sein, eine Kommunikation zwischen der Anzeigevorrichtung 40 und dem Fahrzeugsteuergerät 61 bzw. zwischen dem Server 70 und dem Fahrzeugsteuergerät 61 zu ermöglichen.

Weiter zeigt die Fig. 3 eine Kalibrierungsvorrichtung 10 zum Kalibrieren der Kamera 65 des Fahrerassistenzsystems 64. Die Vorrichtung 10 umfasst die Anzeigevorrichtung 40, ein Fahrzeugdiagnosegerät 50 und ein mobiles Endgerät 80. Im Vergleich zu der Ausführungsform der Fig. 2 ist in der Figur 3 also zusätzlich das mobile Endgerät 80 dargestellt. Das mobile Endgerät 80 kann z.B. ein Tablet, ein Mobiltelefon, ein Smartphone, ein Laptop und/oder ein Notebook sein. Das mobile Endgerät 80 verfügt in der Regel über eine Steuer- und Verarbeitungseinheit 81, eine Kommunikationseinheit 82, einen Speicher 83 und eine Eingabe- und Ausgabeeinheit 84.

Typischerweise umfasst die Kommunikationseinheit 82 eine Sende- und Empfangseinheit (nicht dargestellt) zum drahtlosen Kommunizieren mit den Kommunikationseinheiten 42, 52 und 72 oder dem oben genannten Adapter, welche typischerweise gemäß einem vorbekannten Funkstandard oder Funkprotokoll arbeitet. Für mögliche drahtlose Verbindungen wird auf die in Bezug auf die Kommunikationseinheit 52 genannten Verbindungen verwiesen (s. oben). Zusätzlich oder alternativ kann die Kommunikation der Kommunikationseinheit 82 mit den Kommunikationseinheiten 42, 52, 72 oder dem Adapter auch drahtgebunden stattfinden. Das mobile Endgerät 80 ist ausgestaltet zum Empfangen, Weiterleiten und/oder Bearbeiten von Daten vom Fahrzeugdiagnosegerät 50 und/oder vom Server 70 und/oder vom Adapter.

Das Fahrzeugdiagnosegerät 50 ist ausgestaltet zum Empfangen, Weiterleiten und/oder Bearbeiten von Daten von dem Fahrzeugsteuergerät 61, der Kamera 65, dem Fahrerassistenzsystem 64, dem Server 70, von der Anzeigevorrichtung 40 und/oder vom mobilen Endgerät 80. Die Anzeigevorrichtung 40 ist ausgestaltet zum Empfangen und/oder Bearbeiten von Daten vom Fahrzeugdiagnosegerät 50 und/oder vom mobilen Endgerät 80.

Im Weiteren wird der Einfachheit halber hauptsächlich auf die Anzeigevorrichtung 40, das Fahrzeugdiagnosegerät 50, die Kamera 65, den Server 70 und das mobile Endgerät 80 Bezug genommen. Es ist jedoch klar, dass die Kommunikation zwischen diesen Einheiten über die jeweiligen Kommunikationseinheiten 42, 52, 62, 72, 82 verläuft und dass die Steuerung/Verarbeitung etwaiger Daten oder Signale durch die jeweiligen Steuer- und Verarbeitungseinheiten 41, 51, 61, 71, 81 durchgeführt wird.

Mit der Vorrichtung 10 und/oder dem System 100 der Fig. 2 oder der Fig. 3 kann insbesondere das nachstehende Verfahren zum Kalibrieren der Kamera 65 des Fahrerassistenzsystems 64 durchgeführt werden.

Zunächst wird die Anzeigevorrichtung 40 derart vor dem Fahrzeug 60 ausgerichtet und positioniert, dass eine Kalibrierung der Kamera 65 durchgeführt werden kann. Danach bildet die vor dem Fahrzeug 60 positionierte und ausgerichtete Anzeigevorrichtung 40 das Kalibrierungsmuster 1 ab. Anschließend wird ein Steuerbefehl an die Kamera 65 geschickt. Der Steuerbefehl veranlasst die Kamera 65 zum Aufnehmen des durch die Anzeigevorrichtung 40 abgebildeten Kalibrierungsmusters 1. Der Steuerbefehl kann insbesondere durch die Kommunikationseinheit 52 des Fahrzeugdiagnosegeräts 50 an die Kamera 65 geschickt werden. In diesem Fall erhält das Fahrzeugsteuergerät 61 den Steuerbefehl vom Fahrzeugdiagnosegerät 50 und leitet den Steuerbefehl an die Kamera 65 weiter. Alternativ wird der Steuerbefehl vom Server 70 an die Kamera 65 geschickt. In diesem Fall wird der Steuerbefehl vom Server 70 zum Fahrzeugdiagnosegerät 50 und von dort zum Fahrzeugsteuergerät 61 geschickt, welches es wiederum an die Kamera 65 weiterleitet. Der Steuerbefehl kann auch durch das mobile Endgerät 80 über das Fahrzeugdiagnosegerät 50 und das Fahrzeugsteuergerät 61 an die Kamera geschickt werden.

Nach Erhalt des Steuerbefehls nimmt die Kamera 65 das durch die Anzeigevorrichtung 40 abgebildete Kalibrierungsmuster 1 auf. Die von der Kamera aufgenommenen Bilder können fahrzeugseitig durch die Steuereinheit 61 ausgewertet werden, um die Kamera 65 zu kalibrieren. So können die Bilder der Kamera 65 mit einem im fahrzeugseitigen Speicher 63 hinterlegten Kalibrierungsmuster 1 verglichen werden. Die Kamera 65 wird dann basierend auf dem Vergleich kalibriert.

Alternativ werden die von der Kamera 65 aufgenommenen Bilder des durch die Anzeigevorrichtung 40 abgebildeten Kalibrierungsmusters 1 an das Fahrzeugdiagnosegerät 50 und/oder an den Server 70 geschickt, wo dann die Bilder der Kamera 65 mit dem Kalibrierungsmuster 1 verglichen werden. Beispielsweise können zu ändernde Kameraeinstellungen durch den Vergleich bestimmt werden. Die zu ändernden Kameraeinstellungen werden anschließend an das Fahrzeugsteuergerät 61 oder die Kamera 65 geschickt.

Vor dem Abbilden kann die Anzeigevorrichtung 40 das Kalibrierungsmuster 1 anfordern und erhalten. Beispielsweise übermittelt das Fahrzeugdiagnosegerät 50 das im Speicher 53 hinterlegten Kalibrierungsmuster 1 an die Anzeigevorrichtung 40. Alternativ kann die Anzeigevorrichtung 40 das Kalibrierungsmuster 1 aus dem Speicher 43 abrufen. Das Kalibrierungsmuster 1 kann in einer weiteren Ausführungsform auch von der Datenbank 73 des Servers 70 erhalten werden. In diesem Fall leitet das Fahrzeugdiagnosegerät 50 das Kalibrierungsmuster 1 an die Anzeigevorrichtung 40 weiter. Das mobile Endgerät 80 kann gemäß einer Variante auch das Kalibrierungsmuster 1 an die Anzeigevorrichtung 40 übermitteln

Damit die Anzeigevorrichtung 40 das richtige Kalibrierungsmuster 1 erhält, können zuvor Fahrzeugdaten, wie Fahrzeugtyp, Fahrzeughersteller und/oder Baujahr des Fahrzeuges an die Komponenten 50, 70, 80 übermittelt werden. Danach wird das den Fahrzeugdaten entsprechende Kalibrierungsmuster 1 durch die entsprechenden Komponenten 50, 70, 80 an die Anzeigevorrichtung 40 geschickt.

Die Anzeigevorrichtung 40 kann das Kalibrierungsmuster 1 als Datei oder Bildsignal erhalten. Somit kann der Schritt des Erhaltens des Kalibrierungsmusters 1 umfassen:
- Erhalten eines Bildsignals umfassend das Kalibrierungsmuster 1 oder
- Erhalten einer Datei umfassend das Kalibrierungsmuster 1.

Nach Erhalt des Kalibrierungsmusters 1 kann eine Bestätigung des Erhalts an diejenige Komponente geschickt werden, welche das Kalibrierungsmuster 1 an die Anzeigevorrichtung 40 übermittelt hat. Nach Erhalt der Bestätigung kann die entsprechende Komponente den Steuerbefehl an die Kamera 65 übermitteln. Die Kamera 65 macht infolgedessen ein Bild des durch die Anzeigevorrichtung 40 abgebildeten Kalibrierungsmusters 1.

Ausrichtung, Position und Abstand der Anzeigevorrichtung 40 können mithilfe des Ausrichtungssensors 47, des Positionssensors 48 bzw. des Abstandssensors 49 oder des Maßbandes bestimmt werden. Da das Kalibrierungsmuster 1 elektronisch bzw. digital vorliegt, können die Sensordaten der Sensoren 47, 48, 49 benutzt werden, um das Kalibrierungsmuster 1 vor dem Anzeigen zu bearbeiten. Außerdem oder alternativ können der Abstand, die Position und/oder Ausrichtung der Anzeigevorrichtung 40 relativ zum Fahrzeug 60 z.B. über eine der Eingabe- und Ausgabeeinheiten 54, 84 manuell eingegeben werden können. Position, Abstand und Ausrichtung könnten somit auch manuell bestimmt und eingegeben werden, z.B. mittels des Maßbandes. Die Eingabeeinheit kann z.B. Bestandteil der Anzeigevorrichtung 40, des Fahrzeugdiagnosegeräts 50 und/oder des mobilen Endgeräts 80 sein. In dieser Weise kann das Kalibrierungsmuster 1 in Abhängigkeit des Abstands, der Position (links/rechts) und der Ausrichtung (Orientierung) der Anzeigevorrichtung 40 zum Fahrzeug 60 abgebildet werden. Beispielsweise können eine Größe, Position und/oder Ausrichtung des durch die Anzeigevorrichtung 40 abgebildeten Kalibrierungsmusters 1 in Abhängigkeit der Position und/oder Ausrichtung der Anzeigevorrichtung 40 in Bezug auf das Fahrzeug 60 eingestellt werden. Die Anzeigevorrichtung 40 kann das abzubildende Kalibrierungsmuster 1 modifizieren, wie z.B. verschieben, drehen, verkleinern und/oder vergrößern, und das modifizierte Kalibrierungsmuster 1 abbilden. Alternativ oder zusätzlich kann der Projektor 45 relativ zur Anzeigewand 44 gedreht oder verschoben (nach links/rechts oder nach hinten/vorne) werden, um das auf der Anzeigewand 44 abgebildete Kalibrierungsmuster 1 zu modifizieren. Anstelle des Projektors 45 kann auch mindestens eine im Projektor 45 verwendete optische Komponente (wie Linsen, Spiegel, Blenden etc.) verstellt werden, um das auf die Anzeigetafel 44 projizierte Kalibrierungsmuster 1 zu modifizieren.

Merkmale die nur in Bezug auf einzelne Komponenten, die Vorrichtung 10, den Server 70 oder das System 100 erwähnt wurden, können auch für die beschriebenen Verfahren beansprucht werden und andersherum, soweit sie sich nicht widersprechen.

### Bezugszeichenliste

- 1: Kalibrierungsmuster
- 2: Justagebalken-Skala
- 3: Spiegel
- 4: Justagebalken
- 5: Stellschrauben
- 6: Libelle
- 10: Kalibrierungsvorrichtung
- 12: Fahrgestell
- 13: Längsschiene
- 13': Längsschiene
- 15: Haltegestell
- 20: Radaufnehmer
- 21: Laser
- 40: Anzeigevorrichtung
- 41: Steuer- und Verarbeitungseinheit
- 42: Kommunikationseinheit
- 43: Speicher
- 44: Anzeigetafel
- 45: Projektor
- 46: Bildschirm
- 47: Ausrichtungssensor
- 48: Positionssensor
- 50: Fahrzeugdiagnosegerät
- 51: Steuer- und Verarbeitungseinheit
- 52: Kommunikationseinheit
- 53: Speicher
- 54: Eingab- und Ausgabeeinheit
- 60: Fahrzeug
- 61: Fahrzeugsteuergerät
- 62: Kommunikationseinheit
- 63: Speicher
- 64: Fahrerassistenzsystem
- 65: Kamera
- 66: Diagnoseschnittstelle
- 70: Server
- 71: Steuer- und Verarbeitungseinheit
- 72: Kommunikationseinheit
- 73: Datenbank
- 80: mobiles Endgerät
- 81: Steuer- und Verarbeitungseinheit
- 82: Kommunikationseinheit
- 83: Speicher
- 84: Eingab- und Ausgabeeinheit
- 100: System

## Patentansprüche

1. Verfahren zum Kalibrieren mindestens einer Kamera (65) eines Fahrerassistenzsystems (64), umfassend die Schritte:
- Abbilden eines Kalibrierungsmusters (1) mittels einer Anzeigevorrichtung (40) und
- Übermitteln eines Steuerbefehls an die Kamera (65) zum Aufnehmen des durch die Anzeigevorrichtung abgebildeten Kalibrierungsmusters (1).

2. Verfahren nach Anspruch 1, umfassend die weiteren Schritte:
- Anfordern des Kalibrierungsmusters und
- Erhalten des Kalibrierungsmusters (1) von einer Datenbank (73) oder einem Speicher.

3. Verfahren nach Anspruch 2, umfassend die weiteren Schritte:
- Eingeben und/oder Übermitteln von Fahrzeugdaten und
- Erhalten eines fahrzeugspezifischen Kalibrierungsmusters von der Datenbank (73).

4. Verfahren nach einem der vorstehenden Ansprüche, umfassend die weiteren schritte:
- Bestimmen eines Abstandes, einer Position und/oder Ausrichtung der Anzeigevorrichtung (40) in Bezug auf ein Fahrzeug (60)
- Modifizieren des Kalibrierungsmusters (1) in Abhängigkeit des Abstandes, der Position und/oder Ausrichtung der Anzeigevorrichtung (40) zum Fahrzeug (60) und
- Abbilden des modifizierten Kalibrierungsmusters.

5. Verfahren nach Anspruch 4, umfassend den Schritt:
- Modifizieren einer Größe, Position und/oder Ausrichtung des Kalibrierungsmusters (1).

6. Verfahren nach einem der vorangegangenen Ansprüche, wobei die Anzeigevorrichtung (40)
- eine Anzeigetafel (44) und einen Projektor (45) zum Projizieren des Kalibrierungsmusters (1) auf die Anzeigetafel (44) oder
- einen Bildschirm (46) zum Abbilden des Kalibrierungsmusters (1) aufweist.

7. Verfahren nach einem der vorangegangenen Ansprüche, umfassend die Schritte:
- Erhalten eines Bildsignals umfassend das Kalibrierungsmuster (1) oder
- Erhalten einer Datei umfassend das Kalibrierungsmuster (1).

8. Verfahren zum Kalibrieren mindestens einer Kamera (65) eines Fahrerassistenzsystems, umfassend die Schritte:
- Übermitteln eines Kalibrierungsmusters (1) an eine Anzeigevorrichtung (40) zum Abbilden des Kalibrierungsmusters (1) und
- Übermitteln eines Steuerbefehls an die Kamera (65) zum Aufnehmen des Kalibrierungsmusters (1).

9. Verfahren nach Anspruch 8, umfassen die weiteren Schritte:
- Erhalten des durch die Kamera (65) aufgenommenen Kalibrierungsmusters,
- Vergleichen des durch die Kamera (65) aufgenommenen Kalibrierungsmusters mit dem Kalibrierungsmuster (1),
- Bestimmen von zu ändernden Kameraeinstellungen durch den Vergleich und
- Übermitteln der zu ändernden Kameraeinstellungen an die Kamera (65).

10. Vorrichtung (10) zum Kalibrieren mindestens einer Kamera (65) eines Fahrerassistenzsystems (64), umfassend
- eine Anzeigevorrichtung (40) zum Abbilden eines Kalibrierungsmusters (1),
- eine erste Kommunikationseinheit (52) ausgebildet zum Übermitteln eines Steuerbefehls zum Aufnehmen des durch die Anzeigevorrichtung (40) abgebildeten Kalibrierungsmusters (1) an die Kamera (65).

11. Vorrichtung (10) nach Anspruch 10, wobei die Anzeigevorrichtung (40)
- einen Bildschirm (46) zum Anzeigen des Kalibrierungsmusters (1) oder
- eine Anzeigetafel (44) und einen Projektor (45) zum Projizieren des Kalibrierungsmusters (1) auf die Anzeigetafel (44)
umfasst.

12. Vorrichtung (10) nach einem der Ansprüche 10 - 11, wobei die erste Kommunikationseinheit (52) zum Übermitteln des Kalibrierungsmusters (1) an die Anzeigevorrichtung (40) ausgestaltet ist.

13. Vorrichtung (10) nach einem der Ansprüche 10 - 12, umfassend einen Speicher mit einer ersten Datenbank, welche eine Vielzahl von Kalibrierungsmustern umfasst.

14. Vorrichtung (10) nach einem der Ansprüche 10 - 13, umfassend mindestens
- Mittel zum Bestimmen eines Abstands und/oder einer Position und/oder Ausrichtung der Anzeigevorrichtung (40) zum Fahrzeug (60) und/oder
- Positionierungsmittel zum Positionieren und/oder Ausrichtungsmittel zum Ausrichten der Anzeigevorrichtung (40) in Bezug auf ein Fahrzeug (60).

15. Server (70), umfassend eine zweite Kommunikationseinheit (72), eine zweite Steuer- und Verarbeitungseinheit (71) und eine zweite Datenbank (73), wobei die zweite Datenbank (73) eine Vielzahl von Kalibrierungsmustern (1) umfasst, wobei die zweite Kommunikationseinheit (72) zum
- Übermitteln des Kalibrierungsmusters (1) an eine Anzeigevorrichtung (40) zum Abbilden des Kalibrierungsmusters (1) und
- Übermitteln eines Steuerbefehls an die Kamera (65) zum Aufnehmen des durch die Anzeigevorrichtung (40) abgebildeten Kalibrierungsmusters (1)
ausgebildet ist.
